# EUROPEAN PATENT APPLICATION

(11) **EP 4 395 047 A1**
(43) Date of publication of application: **03.07.2024**
(21) Application number: 22909467.7
(22) Date of filing: 18.10.2022
(51) Int. Cl.: H01M 50/531, H01M 50/533, H01M 50/103, H01M 50/571

(54) **BATTERY UNIT, BATTERY MODULE, AND VEHICLE**

(30) Priority: 21.12.2021 CN 202123252716 U
(71) Applicant: BYD Company Limited, Shenzhen, Guangdong 518118 (CN)
(72) Inventor: WANG, Xinyue, Shenzhen, Guangdong 518118 (CN); YUAN, Wansong, Shenzhen, Guangdong 518118 (CN); DUAN, Pingan, Shenzhen, Guangdong 518118 (CN); WEN, Aipeng, Shenzhen, Guangdong 518118 (CN)
(74) Representative: Dehns Germany Partnerschaft mbB
(86) International application number: PCT/CN2022/125892
(87) International publication number: WO 2023/116149

(57) **Abstract**

A battery unit, a battery module, and a vehicle are provided. The battery unit includes a housing, an electrode core, a first electrode terminal, and a second electrode terminal. A chamber is defined in the housing. The electrode core is arranged in the chamber, the electrode core includes a first electrode tab and a second electrode tab, one of the first electrode tab and the second electrode tab is a positive electrode tab, the other one of the first electrode tab and the second electrode tab is a negative electrode tab, and the positive electrode tab is physically and electrically connected to the housing. The first electrode terminal is electrically connected to the first electrode tab. The second electrode terminal is electrically connected to the second electrode tab.

## Description

### CROSS-REFERENCE TO RELATED APPLICATIONS

The present disclosure claims priority to Chinese Patent Application No. 202123252716.5, filed on December 21, 2021 and entitled "BATTERY UNIT, BATTERY MODULE, AND VEHICLE". The entire content of the above-referenced application is incorporated herein by reference.

### FIELD

The present disclosure relates to the field of battery technologies, and more specifically, to a battery unit, a battery module to which the battery unit is applied, and a vehicle that includes the battery module.

### BACKGROUND

A battery usually includes an aluminum shell and a battery core installed inside the aluminum shell. The aluminum shell is typically not electrified. As a reaction occurs inside the battery, lithium reacts with the aluminum shell during the reaction, and lithium ions are embedded into the aluminum shell to form an aluminum-lithium alloy, which corrodes the aluminum shell, and affects a service life of the battery.

### SUMMARY

According to an objective of the present disclosure, a battery unit is provided, and includes: a housing, where a chamber is defined in the housing; an electrode core, where the electrode core is arranged in the chamber, the electrode core includes a first electrode tab and a second electrode tab, one of the first electrode tab and the second electrode tab is a positive electrode tab, the other one of the first electrode tab and the second electrode tab is a negative electrode tab, and the positive electrode tab is physically and electrically connected to the housing; a first electrode terminal, where the first electrode terminal is electrically connected to the first electrode tab; and a second electrode terminal, where the second electrode terminal is electrically connected to the second electrode tab.

In an embodiment of the present disclosure, an end of the first electrode tab or the second electrode tab near the housing includes multiple connection pieces spaced apart.

In an embodiment of the present disclosure, the electrode core has a long axis and a short axis, the first electrode tab is arranged along the long axis or the short axis, and the second electrode tab is arranged along the long axis or the short axis.

In an embodiment of the present disclosure, the multiple connection pieces are spaced apart in a direction of the long axis.

In an embodiment of the present disclosure, the multiple connection pieces are connected in series.

In an embodiment of the present disclosure, the housing includes: a lower piece, where the chamber is defined in the lower piece with an opening; and an upper cover, where the upper cover is arranged in the opening to seal at least a part of the chamber, and the upper cover is welded to the positive electrode tab.

In an embodiment of the present disclosure, the first electrode terminal is connected to the upper cover to electrically connect to the positive electrode tab.

In an embodiment of the present disclosure, the positive electrode tab is a bent member having an opening groove, and the battery unit further includes: a first insulation side plate. The first insulation side plate is arranged in the opening groove, so that at least a part of the positive electrode tab is located between the first insulation side plate and the upper cover.

In an embodiment of the present disclosure, the first insulation side plate is connected to the electrode core through an adhesive layer.

In an embodiment of the present disclosure, the battery unit further includes: a second insulation side plate. The second insulation side plate is arranged between the housing and the negative electrode tab, so that the housing is insulated from the negative electrode tab.

In an embodiment of the present disclosure, the second insulation side plate is connected to the electrode core through an adhesive layer.

In an embodiment of the present disclosure, one of the first electrode terminal and the second electrode terminal is a positive electrode terminal, and the other one of the first electrode terminal and the second electrode terminal is a negative electrode terminal.

In an embodiment of the present disclosure, the battery unit further includes: an electrode terminal cover plate. The electrode terminal cover plate is arranged in the housing, and the first electrode terminal and the second electrode terminal is arranged on the electrode terminal cover plate.

In an embodiment of the present disclosure, the battery unit further includes: a bald cover plate. The bald cover plate is located between the electrode terminal cover plate and the housing, and the bald cover plate is separately electrically connected to the positive electrode terminal and the housing, and is insulated from the negative electrode terminal.

In an embodiment of the present disclosure, the battery unit further includes: an explosion-proof valve cover plate. The explosion-proof valve cover plate is arranged along the short axis, and the explosion-proof valve cover plate and the electrode terminal cover plate are located on two sides of the long axis.

According to another objective of the present disclosure, a battery module is provided, and includes the battery unit in any one of the foregoing embodiments.

According to still another objective of the present disclosure, a vehicle is provided, and includes the battery module in any one of the foregoing embodiments.

Other features and advantages of the present disclosure will become more apparent from the following detailed description of the example embodiments of the present disclosure with reference to the accompanying drawings.

### BRIEF DESCRIPTION OF THE DRAWINGS

The accompanying drawings, which are incorporated in the specification and constitute a part of the specification, illustrate the embodiments of the present disclosure, and together with the description thereof, are used to explain the principle of the present disclosure.
FIG. 1 is a schematic diagram of a structure of a battery according to an embodiment of the present disclosure;
FIG. 2 is an exploded diagram of a battery according to an embodiment of the present disclosure;
FIG. 3 is an enlarged view of a region A circled in FIG. 2;
FIG. 4 is a schematic diagram of a partial structure of an electrode core according to an embodiment of the present disclosure; and
FIG. 5 is a schematic diagram of a connection between a first electrode tab of an electrode core and an upper cover according to an embodiment of the present disclosure.

### Reference numerals:

battery unit 100;
electrode core 10;
first electrode tab 11; connection piece 111; opening groove 112;
second electrode tab 12;
housing 20; chamber 21; lower piece 22; upper cover 23;
first insulation side plate 30;
electrode terminal cover plate 40;
first electrode terminal 41; second electrode terminal 42;
explosion-proof valve cover plate 50;
second insulation side plate 60; and
bald cover plate 70.

### DETAILED DESCRIPTION

Various example embodiments of the present disclosure will now be described in detail with reference to the accompanying drawings. It should be noted that the relative arrangements, numeric expressions, and values of the components and steps described in these embodiments are not construed as a limitation on the scope of the present disclosure unless otherwise specified.

The following descriptions of at least one example embodiment are merely illustrative and are not intended to limit the present disclosure and application or use thereof.

Techniques, methods, and devices known to a person of ordinary skill in the art may not be discussed in detail, but the techniques, methods, and devices shall be considered as a part of the specification where appropriate.

In all the examples illustrated and discussed herein, any specific value should be interpreted as merely an example instead of a limitation. Therefore, other examples of example embodiments may have different values.

It should be noted that similar reference numerals and letters represent similar items in the following accompanying drawings, and therefore, once an item is defined in one of the accompanying drawings, the item does not need to be further discussed in subsequent accompanying drawings.

An objective of the present disclosure is to provide a new technical solution of a battery unit, to resolve a problem in the related art that a housing of a battery is prone to corrosion.

Another objective of the present disclosure is to provide a new technical solution of a battery module, which includes the foregoing battery unit.

Still another objective of the present disclosure is to provide a new technical solution of a vehicle, which includes the foregoing battery module.

According to embodiments of the present disclosure, physically and electrically connecting a positive electrode tab to a housing can make the housing electrified to prevent the housing from being corroded, simplify a structure inside a battery, and also diversify a position at which the positive electrode tab is arranged. For example, the positive electrode tab can be conveniently electrically connected to the housing even if the positive electrode tab is arranged along a long axis of an electrode core.

The following describes a battery unit 100 according to the embodiments of the present disclosure in detail with reference to the accompanying drawings.

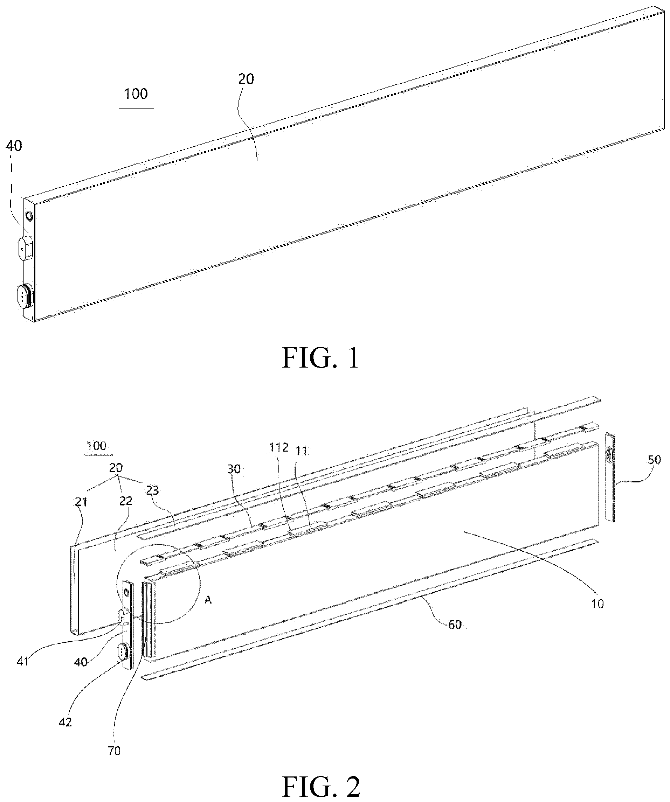

As shown in FIG. 1 to FIG. 5, the battery unit 100 according to the embodiments of the present disclosure includes a housing 20, an electrode core 10, a first electrode terminal 41, and a second electrode terminal 42.

Specifically, a chamber 21 is defined in the housing 20, the electrode core 10 is arranged in the chamber 21, the electrode core 10 includes at least one first electrode tab 11 and at least one second electrode tab 12, one of the first electrode tab 11 and the second electrode tab 12 is a positive electrode tab, the other one of the first electrode tab 11 and the second electrode tab 12 is a negative electrode tab, and the positive electrode tab is physically and electrically connected to the housing 20. The first electrode terminal 41 is electrically connected to the first electrode tab 11, and the second electrode terminal 42 is electrically connected to the second electrode tab 12.

In other words, the battery unit 100 according to the embodiments of the present disclosure mainly includes the housing 20, the electrode core 10, the first electrode terminal 41, and the second electrode terminal 42. The chamber 21 is formed in the housing 20, and the chamber 21 has an accommodating function. For example, the electrode core 10 is installed in the chamber 21. The electrode core 10 includes the first electrode tab 11 and the second electrode tab 12. When the first electrode tab 11 is a positive electrode tab, the second electrode tab 12 is a negative electrode tab. When the first electrode tab 11 is a negative electrode tab, the second electrode tab 12 is a positive electrode tab.

The positive electrode tab is physically and electrically connected to the housing 20, in other words, the positive electrode tab is in physical contact with and electrically connected to the housing 20. Enabling the positive electrode tab to be in direct physical contact with the housing 20 avoids a disadvantage that an internal structure of a battery is complex and required space is large due to use of an interconnection member. In addition, when the positive electrode tab is arranged in a direction of a long axis of the electrode core 10, it can still be ensured that the housing 20 is electrified and has a compact structure.

Electrically connecting the housing 20 to the positive electrode tab can enable a voltage of the housing 20 to be the same as a voltage of a positive electrode, which equivalently means that the housing 20 is positively electrified, so that the voltage increases. For example, if the housing 20 is an aluminum shell, a voltage of the aluminum shell increases, and lithium does not react with the high-voltage aluminum shell during a reaction. If the aluminum shell is not electrified or has a negative voltage, lithium ions are embedded into the aluminum shell to form an aluminum-lithium alloy, which corrodes the aluminum shell.

In addition, the battery unit 100 further includes the first electrode terminal 41 and the second electrode terminal 42. The first electrode terminal 41 is electrically connected to the first electrode tab 11, and the second electrode terminal 42 is electrically connected to the second electrode tab 12. This can achieve a coupling function. A positive electrode terminal is connected to the positive electrode tab, and a negative electrode terminal is connected to the negative electrode tab. The positive electrode terminal may be electrically connected to the positive electrode tab through the housing 20.

Therefore, according to the battery unit 100 in the embodiments of the present disclosure, physically and electrically connecting the positive electrode tab to the housing 20 can make the housing 20 electrified to prevent the housing 20 from being corroded, simplify a structure inside the battery, and also diversify a position at which the positive electrode tab is arranged. For example, the positive electrode tab can be conveniently electrically connected to the housing 20 even if the positive electrode tab is arranged along the long axis of the electrode core 10.

According to the embodiments of the present disclosure, an end of the first electrode tab 11 or the second electrode tab 12 near the housing 20 includes multiple connection pieces 111 spaced apart.

The electrode core 10 in the embodiments of the present disclosure may mainly include a first electrode plate, the first electrode tab 11, a second electrode plate, the second electrode tab 12, and a separator. The first electrode tab 11 is arranged on the first electrode plate, the second electrode tab 12 is arranged on the second electrode plate, and the separator is arranged between the first electrode plate and the second electrode plate.

When the end of the first electrode tab 11 or the second electrode tab 12 near the housing 20 includes multiple connection pieces 111 spaced apart, the following multiple cases are included. The following uses the first electrode tab 11 as an example for description.

### Case 1

A first end of the first electrode tab 11 is connected to the first electrode plate, a second end of the first electrode tab 11 has multiple connection pieces 111, and a partition groove exists between two adjacent connection pieces 111. In other words, the first end of the first electrode tab 11 is of an integral structure, and the second end of the first electrode tab 11 is of a partition structure.

### Case 2

The first electrode tab 11 is divided into multiple connection pieces 111, two adjacent connection pieces 111 are spaced apart, and an end of each connection piece 111 is directly connected to the first electrode plate.

In both case 1 and case 2, compared with a first electrode tab 11 of an integral structure in the related art, the first electrode tab 11 in the present disclosure has a smaller direct current resistance (DCR), so that a DCR of the electrode core 10 can be reduced. Similarly, the second electrode tab 12 using multiple connection pieces 111 can also reduce a DCR, and details are not described herein again. In addition, a polarity of the first electrode tab 11 is opposite to that of the second electrode tab 12. Regardless of whether the first electrode tab 11 is a positive electrode tab or a negative electrode tab, an end portion of the first electrode tab 11 away from the first electrode plate is divided into multiple connection pieces 111.

In the embodiments, using multiple connection pieces 111 can reduce the direct current resistance of the first electrode tab 11 or the second electrode tab 12, so as to reduce the direct current resistance of the electrode core 10.

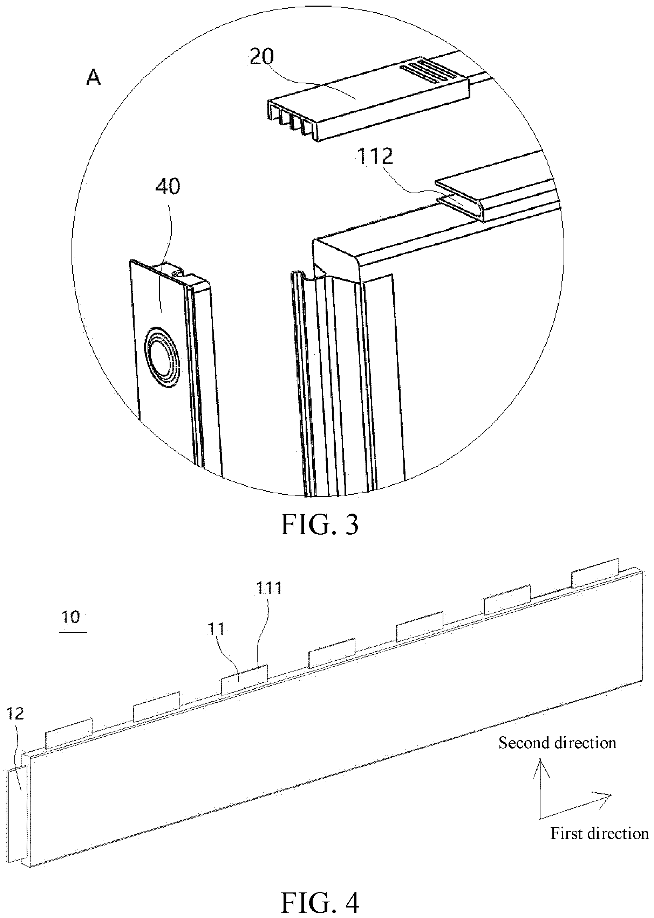

According to the embodiments of the present disclosure, the electrode core 10 has the long axis and a short axis, the first electrode tab 11 is arranged along the long axis or the short axis, and the second electrode tab 12 is arranged along the long axis or the short axis. When the first electrode tab 11 is arranged along the long axis, the second electrode tab 12 may be arranged along the long axis or the short axis. When the first electrode tab 11 is arranged along the short axis, the second electrode tab 12 may be arranged along the long axis or the short axis. As shown in FIG. 4, for example, the electrode core 10 is approximately a rectangle-like member, and has the long axis (that is, a long edge of the rectangle) and the short axis (that is, a short edge of the rectangle). The long axis extends in a first direction, and the short axis extends in a second direction. The first direction is nearly perpendicular to the second direction.

Further, the positive electrode tab is arranged along the long axis, and a size of the long axis is greater than a size of the short axis. A requirement for reducing impedance of the electrode core 10 in the first direction is greater than a requirement for reducing impedance of the electrode core 10 in the second direction. Therefore, when the first electrode tab 11 is arranged along the long axis, an impedance reduction effect in the first direction can be ensured. In addition, due to a limited size of the short axis, especially for a blade battery, it is convenient to arrange the first electrode tab 11 in the direction of the long axis. In other words, designing multiple connection pieces 111 on a side surface of the electrode core 10 in a length direction helps reduce a resistance of the entire electrode core 10, especially for a long blade battery. Still further, the negative electrode tab is arranged along the short axis, which facilitates an electrical connection between the negative electrode tab and the negative electrode terminal located on the short axis. In a solution in the related art in which a positive electrode tab and a negative electrode tab are respectively arranged along two short axes opposite to each other, a current of a positive cover plate in the related art flows to an electrode terminal cover plate 40 through an entire aluminum shell, and in this case, a DCR includes a resistance of the aluminum shell. However, a current of the positive electrode in the present disclosure reaches the positive electrode terminal from a side surface, so that a DCR of the aluminum shell can be reduced.

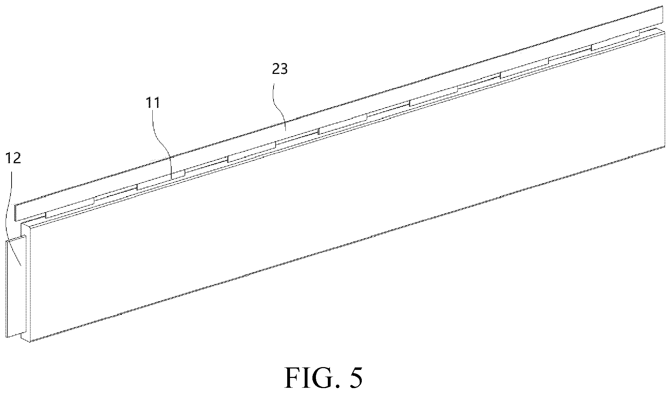

In some specific implementations of the present disclosure, as shown in FIG. 4 and FIG. 5, the multiple connection pieces 111 are spaced apart in the direction of the long axis, which facilitates processing and production. When the electrode core 10 is applied to the battery unit 100, the multiple connection pieces 111 are spaced apart in the first direction, so that an intermediate structure for electrically connecting the multiple connection pieces 111 to the housing 20 can be simplified.

According to the embodiments of the present disclosure, the multiple connection pieces 111 are connected in series. When the electrode core 10 is applied to the battery unit 100, the first electrode tab 11 may be directly or indirectly connected to the housing 20, so that the housing 20 is electrified. In the embodiments, the multiple connection pieces 111 connected in series help simplify the intermediate structure used to implement an electrical connection between the first electrode tab 11 and the housing 20.

According to the embodiments of the present disclosure, as shown in FIG. 2 and FIG. 3, the housing 20 includes a lower piece 22 and an upper cover 23. The chamber 21 is defined in the lower piece 22 with an opening. The upper cover 23 is arranged in the opening to seal at least a part of the chamber 21, and the upper cover 23 is welded to the positive electrode tab.

In other words, the housing 20 may include the lower piece 22 and the upper cover 23, a groove is provided in the lower piece 22, and the lower piece 22 and the upper cover 23 engage with each other to form the chamber 21. As shown in FIG. 5, the positive electrode tab may first perform ultrasonic pre-welding, the positive electrode tab and the upper cover 23 are welded together by using laser after the ultrasonic pre-welding, and the upper cover 23 is in communication with the positive electrode terminal. A second end of the positive electrode tab may be directly welded to the housing 20, so that a direct connection between the positive electrode tab and the housing 20 is implemented, and the housing 20 is electrified.

According to the embodiments of the present disclosure, the first electrode terminal 41 is connected to the upper cover 23 to electrically connect to the positive electrode tab. In other words, the first electrode terminal 41 is a positive electrode terminal, and the positive electrode terminal is electrically connected to the positive electrode tab through the housing 20.

According to the embodiments of the present disclosure, as shown in FIG. 2 and FIG. 3, the positive electrode tab is a bent member with an opening groove 112, and the battery unit 100 further includes a first insulation side plate 30. The first insulation side plate 30 is arranged in the opening groove 112, so that at least a part of the positive electrode tab is located between the first insulation side plate 30 and the upper cover 23. In other words, during assembling of the battery unit 100, the positive electrode tab may be bent. In this case, the positive electrode tab is formed into a "U"-like shape, the "U" shape has an opening groove 112, or the positive electrode tab is formed into a "7"-like shape, and the positive electrode tab engages with another component of the electrode core 10 to form an opening groove 112.

In the embodiments, the first insulation side plate 30 is arranged in the positive electrode tab, so that the first insulation side plate 30 has a supporting function for the positive electrode tab after the positive electrode tab is folded. In other words, using the first insulation side plate 30 can prevent the positive electrode tab from being excessively squeezed by the housing 20, so as to improve safety performance of the battery unit 100.

According to the embodiments of the present disclosure, the first insulation side plate 30 is connected to the electrode core 10 through an adhesive layer. In other words, the first insulation side plate 30 may be fastened to the electrode core 10 by using a tape, so that the electrode core 10 can be prevented from moving inside the battery.

In some specific implementations of the present disclosure, as shown in FIG. 2 and FIG. 3, the battery unit 100 further includes a second insulation side plate 60, and the second insulation side plate 60 is arranged between the housing 20 and the negative electrode tab, so that the housing 20 is insulated from the negative electrode tab, and short-circuiting can be avoided.

According to the embodiments of the present disclosure, the second insulation side plate 60 is connected to the electrode core 10 through an adhesive layer. In other words, the second insulation side plate 60 may be fastened to the electrode core 10 by using a tape, so that the electrode core 10 can be prevented from moving inside the battery.

According to the embodiments of the present disclosure, as shown in FIG. 2 and FIG. 3, the battery unit 100 further includes an electrode terminal cover plate 40, the electrode terminal cover plate 40 is arranged in the housing 20, and the first electrode terminal 41 and the second electrode terminal 42 are arranged on the electrode terminal cover plate 40.

For example, the electrode terminal cover plate 40 is arranged along the short axis of the electrode core 10, and the positive electrode terminal and the negative electrode terminal are arranged on the electrode terminal cover plate 40. In other words, both the positive electrode terminal and the negative electrode terminal are installed on the electrode terminal cover plate 40, which facilitates processing and production. In addition, the positive electrode tab is arranged on a side surface, and the positive electrode tab has a connection piece 111, and therefore, the current of the positive electrode directly reaches the electrode terminal cover plate 40 from the side surface, so that a DCR of the housing 20 is reduced.

In some specific implementations of the present disclosure, one of the first electrode terminal 41 and the second electrode terminal 42 is a positive electrode terminal, the other one of the first electrode terminal 41 and the second electrode terminal 42 is a negative electrode terminal, the battery unit 100 further includes a bald cover plate 70, the bald cover plate 70 is located between the electrode terminal cover plate 40 and the housing 20, and the bald cover plate 70 is separately electrically connected to the positive electrode terminal and the housing 20, and is insulated from the negative electrode terminal.

According to the embodiments of the present disclosure, as shown in FIG. 2, the battery unit 100 further includes an explosion-proof valve cover plate 50. The explosion-proof valve cover plate 50 is arranged along the short axis, and the explosion-proof valve cover plate 50 and the electrode terminal cover plate 40 are located on two sides of the long axis. The housing 20, the electrode terminal cover plate 40, and the explosion-proof valve cover plate 50 may be welded to form the sealed chamber 21.

According to the embodiments of the present disclosure, a size of the electrode core 10 in the direction of the long axis is 700-800 mm, the size of the short axis is approximately 100 mm, and a size of the connection piece 111 in the direction of the long axis is 30-50 mm. The positive electrode tab is divided into multiple connection pieces 111. A weld through which each connection piece 111 is welded to the upper cover 23 is kept at 26-46 mm. If the weld is excessively large, the weld is easily penetrated. A spacing between two adjacent connection pieces 111 in the direction of the long axis is kept at 80-100 mm. A quantity of connection pieces 111 may be adjusted based on a length of the battery unit 100. According to the foregoing design, a positive electrode tab can be led out from a side surface of a long blade battery, to optimize a current path and reduce an internal resistance of the battery unit 100.

In some specific implementations of the present disclosure, a thickness of the upper cover 23 may be kept at 1-2 mm. This thickness can reduce a deformation degree of the upper cover 23 while ensuring welding strength. The positive electrode tab conducts electricity to the positive electrode terminal through the upper cover 23 to form a current path.

The following describes the battery unit 100 according to the present disclosure in detail with reference to a specific embodiment.

The housing 20 includes the lower piece 22 and the upper cover 23. A shape of the housing 20 is the same as a shape of the electrode core 10, and the electrode core 10 is a rectangular member. The electrode core 10 has the long axis and the short axis. The long axis extends in a horizontal direction, and the short axis extends in a vertical direction. The positive electrode tab projects from an upper side surface of the electrode core 10, and the positive electrode tab has multiple connection pieces 111, and the negative electrode tab projects from a left side surface of the electrode core 10. The electrode terminal cover plate 40 is arranged on a left side surface of the lower piece 22, and the explosion-proof valve cover plate 50 is arranged on a right side surface of the lower piece 22. The positive electrode terminal and the negative electrode terminal are arranged on the electrode terminal cover plate 40. The bald cover plate 70 is arranged between the electrode terminal cover plate 40 and the housing 20, and the bald cover plate 70 is insulated from the negative electrode terminal.

After assembling of the battery is completed, the connection piece 111 is formed into a bent member, and an upper surface of the connection piece 111 is welded to the upper cover 23. A current path of the battery may be positive electrode terminal->bald cover plate 70->upper cover 23->positive electrode tab->positive electrode plate->negative electrode plate->negative electrode tab->negative electrode terminal.

In conclusion, according to the battery unit 100 in the embodiments of the present disclosure, the housing 20 is electrified and allows a current to pass through, so that the battery unit 100 has an anti-corrosion effect, and multiple connection pieces 111 are arranged in the first electrode tab 11 and/or the second electrode tab 12, so that the internal resistance of the battery unit 100 is reduced.

An embodiment of the present disclosure further provides a battery module. The battery module includes the battery unit 100 in any one of the foregoing embodiments. Because the battery unit 100 according to the embodiments of the present disclosure extends a service life of the housing 20, the battery module according to this embodiment of the present disclosure also has the foregoing advantage. Details are not described herein again.

An embodiment of the present disclosure further provides a vehicle. The vehicle includes the battery module in any one of the foregoing embodiments. Because the battery module according to the embodiments of the present disclosure extends a service life of the housing 20, the vehicle according to this embodiment of the present disclosure also has the foregoing advantage. Details are not described herein again.

Although some specific embodiments of the present disclosure have been described in detail by using examples, a person skilled in the art should understand that the foregoing examples are merely for description, and are not intended to limit the scope of the present disclosure. A person skilled in the art should understand that the foregoing embodiments may be modified without departing from the scope and spirit of the present disclosure. The scope of the present disclosure is limited by the appended claims.

## Claims

1. A battery unit (100), comprising:
a housing (20), a chamber (21) being defined in the housing (20);
an electrode core (10), the electrode core (10) being arranged in the chamber (21), the electrode core (10) comprising a first electrode tab (11) and a second electrode tab (12), one of the first electrode tab (11) and the second electrode tab (12) being a positive electrode tab, the other one of the first electrode tab (11) and the second electrode tab (12) being a negative electrode tab, and the positive electrode tab being physically and electrically connected to the housing (20);
a first electrode terminal (41), the first electrode terminal (41) being electrically connected to the first electrode tab (11); and
a second electrode terminal (42), the second electrode terminal (42) being electrically connected to the second electrode tab (12).

2. The battery unit (100) according to claim 1, wherein an end of the first electrode tab (11) or the second electrode tab (12) near the housing (20) comprises a plurality of connection pieces (111) spaced apart.

3. The battery unit (100) according to claim 1 or 2, wherein the electrode core (10) has a long axis and a short axis, the first electrode tab (11) is arranged along the long axis or the short axis, and the second electrode tab (12) is arranged along the long axis or the short axis.

4. The battery unit (100) according to any one of claims 1 to 3, wherein the plurality of connection pieces (111) are spaced apart in a direction of the long axis.

5. The battery unit (100) according to any one of claims 1 to 4, wherein the plurality of connection pieces (111) are connected in series.

6. The battery unit (100) according to any one of claims 1 to 5, wherein the housing (20) comprises:
a lower piece (22), wherein the chamber (21) is defined in the lower piece (22) with an opening; and
an upper cover (23), wherein the upper cover (23) is arranged in the opening to seal at least a part of the chamber (21), and the upper cover (23) is welded to the positive electrode tab.

7. The battery unit (100) according to any one of claims 1 to 6, wherein the first electrode terminal (41) is connected to the upper cover (23) to electrically connect to the positive electrode tab.

8. The battery unit (100) according to any one of claims 1 to 7, wherein the positive electrode tab is a bent member having an opening groove (112), and the battery unit (100) further comprising:
a first insulation side plate (30), the first insulation side plate (30) being arranged in the opening groove (112), so that at least a part of the positive electrode tab is located between the first insulation side plate (30) and the upper cover (23).

9. The battery unit (100) according to any one of claims 1 to 8, wherein the first insulation side plate (30) is connected to the electrode core (10) through an adhesive layer.

10. The battery unit (100) according to any one of claims 1 to 9, further comprising:
a second insulation side plate (60), the second insulation side plate (60) being arranged between the housing (20) and the negative electrode tab, so that the housing (20) is insulated from the negative electrode tab.

11. The battery unit (100) according to any one of claims 1 to 10, wherein the second insulation side plate (60) is connected to the electrode core (10) through an adhesive layer.

12. The battery unit (100) according to any one of claims 1 to 11, wherein one of the first electrode terminal (41) and the second electrode terminal (42) is a positive electrode terminal, and the other one of the first electrode terminal (41) and the second electrode terminal (42) is a negative electrode terminal.

13. The battery unit (100) according to any one of claims 1 to 12, further comprising:
an electrode terminal cover plate (40), the electrode terminal cover plate (40) being arranged in the housing (20), and the first electrode terminal (41) and the second electrode terminal (42) being arranged on the electrode terminal cover plate (40).

14. The battery unit (100) according to any one of claims 1 to 13, further comprising:
a bald cover plate (70), the bald cover plate (70) being located between the electrode terminal cover plate (40) and the housing (20), and the bald cover plate (70) being separately electrically connected to the positive electrode terminal and the housing (20), and being insulated from the negative electrode terminal.

15. The battery unit (100) according to any one of claims 1 to 14, further comprising:
an explosion-proof valve cover plate (50), the explosion-proof valve cover plate (50) being arranged along the short axis, and the explosion-proof valve cover plate (50) and the electrode terminal cover plate (40) being located on two sides of the long axis.

16. A battery module, comprising the battery unit (100) according to any one of claims 1 to 15.

17. A vehicle, comprising the battery module according to claim 16.
